# EUROPÄISCHE PATENTANMELDUNG

(11) **EP 1 508 492 A2**
(43) Veröffentlichungstag der Anmeldung: **23.02.2005**
(21) Anmeldenummer: 04015083.1
(22) Anmeldetag: 26.06.2004
(51) Int. Cl.: B62D 1/184

(54) **Lenksäule für ein Kraftfahrzeug**

(30) Priorität: 16.08.2003 DE 10337585
(71) Anmelder: AUDI AG, 85045 Ingolstadt (DE)
(72) Erfinder: Bräutigam, Heribert, 58057 Ingolstadt (DE)
(74) Vertreter: Asch, Konrad, Dipl.-Ing.

(57) **Zusammenfassung**

Die Erfindung betrifft eine Lenksäule 10 für ein Kraftfahrzeug, insbesondere einen Personenkraftwagen, die einen hinteren Säulenabschnitt 12 aufweist, der in einer Halterung 20 um eine horizontal und quer verlaufende Gelenkachse 22a eines vorderen Schwenkgelenks 22 auf und ab schwenkbar gelagert und durch einen Klemmmechanismus 24 klemmbar ist, wobei die Halterung 20 zwei Seitenwangen 40, 42 aufweist, zwischen denen ein Führungskasten 36 der Lenksäule 10 auf und ab schwenkbar gelagert ist, wobei der Klemmmechanismus 24 eine Klemmschraube 44 aufweist, die den Führungskasten 36 in einem Durchgangsloch und die Seitenwangen 40, 42 jeweils in einem Langloch 46 durchfasst. Um den Klemmmechanismus zu stabilisieren, ist an einer Seitenwange 42 ein Stützteil 58 mit einem Loch 60 auf der Klemmschraube 44 angeordnet, das durch eine Formschlussverbindung 62 mit dem Führungskasten 36 lösbar verbunden ist.

## Beschreibung

Die Erfindung betrifft eine Lenksäule gemäß der im Oberbegriff des Anspruchs 1 oder 7 angegebenen Art.

Eine derartige Lenksäule ist in der DE 101 61 849 A1 beschrieben. Bei dieser vorbekannten Lenksäule weist ein Klemmmechanismus zum Festklemmen des schwenkbaren Lenksäulenabschnitts beidseitig angeordnete Lamellenpakete auf, wobei eine Klemmschraube des Klemmmechanismus zwei etwa aufrecht verlaufende Langlöcher in zwei Seitenwangen und zwei längs der Lenksäule verlaufende Langlöcher in den Lamellenpaketen durchsetzt. Durch ein Anziehen der Klemmschraube erfolgt ein Verklemmen der aneinanderliegenden Teile aufgrund von Reibschluss. Bei einer solchen Arretierung besteht insbesondere dann, wenn das Verklemmen mit geringeren Spannkräften erfolgte, die Gefahr einer unbeabsichtigten Lenksäulenverstellung. Hierbei ist zu berücksichtigen, dass im Fahrbetrieb auftretende Schwingungen diese Gefahr vergrößern. Ferner kommt es bei einem Fahrzeugcrash zu unerwünschten Gelenkbewegungen im Bereich der Klemmschraube. Dies gilt insbesondere für eine Verstellung in der durch das aufrechte Langloch gebildeten Führung.

Der Erfindung liegt die Aufgabe zugrunde, eine Lenksäule gemäß der im Oberbegriff des Anspruchs 1 angegebenen Art derart weiterzubilden, dass unter Vermeidung der genannten Nachteile der Klemmmechanismus stabilisiert wird.

Diese Aufgabe wird durch die kennzeichnenden Merkmale des Anspruchs 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass sich eine Formschlussverbindung aus Stabilitätsgründen besser für eine vorliegende Klemmverbindung eignet als eine Reibschlussverbindung.

Bei der erfindungsgemäßen Ausgestaltung nach Anspruch 1 ist an der Seitenwange ein Stützteil mit einem Loch auf der Klemmschraube angeordnet, das durch eine Formschlussverbindung mit dem Führungskasten lösbar verbunden ist. Hierdurch ist die Klemmverbindung aufgrund des Formschlusses zwischen dem Führungskasten und dem Stützteil wesentlich stabilisiert, da ein Formschluss wie eine eingerückte Kupplung wirkt. Die erfindungsgemäße Ausgestaltung stabilisiert die Klemmverbindung deshalb nicht nur im Hinblick auf die aus einem Fahrbetrieb resultierenden Belastungen sondern auch im Hinblick auf die aus einem Fahrzeugcrash resultierenden Belastungen. Auch bei einem Crash wird einer Verstellung in der Klemmverbindung aufgrund der Stabilisierung wirksam entgegengewirkt.

Die Formschlussverbindung stabilisiert die Klemmverbindung in alle möglichen in der Verstellebene wirksamen Belastungsrichtungen. Hierbei kann die Formschlussverbindung durch einen oder mehrere Verbindungszapfen an dem einen Verbindungsteil gebildet sein, der bzw. die jeweils in eine zugehörige Verbindungsausnehmung im anderen Verbindungsteil einfasst bzw. einfassen.

Es lässt sich eine günstige Konstruktion von kleiner Bauweise erreichen, wenn der oder die Verbindungszapfen am Stützteil und die Verbindungsausnehmung oder Verbindungsausnehmungen in einem Führungskasten des hinteren Säulenabschnitts angeordnet ist bzw. sind.

Die Klemmverbindung lässt sich zusätzlich auch dadurch stabilisieren, wenn das Stützteil die Seitenwange vorzugsweise U-förmig überdeckt und vorder- und/oder rückseitig von der Seitenwange jeweils eine oder mehrere Formschlussverbindungen vorgesehen sind. Außerdem führt diese Ausgestaltung zu einer Drehblockierung im Bereich der Klemmschraube.

Eine Formschlussverbindung, bei der ein Verbindungszapfen in eine in dessen Querrichtung allseitig geschlossene Verbindungsausnehmung einfasst, ist zwar allseitig wirksam, jedoch wird die Klemmverbindung gegen nach unten wirksame Belastungen gestützt und stabilisiert, wenn ein oder mehrere untere Verbindungszapfen einen Führungskasten auf der Lenksäule untergreifen.

Bei der bekannten Lenksäule ist insbesondere die ein Auf- und Abschwenken ermöglichende etwa aufrechte Führung wegen der schmalen Seitenflächen der Lamellen vermindert belastbar und verschleißanfällig.

Der Erfindung liegt deshalb im Weiteren die Aufgabe zugrunde, eine Lenksäule gemäß der im Oberbegriff des Anspruchs 7 angegebenen Art derart weiterzubilden, dass unter Vermeidung der genannten Nachteile die aufrechte Führung stabilisiert wird.

Diese Aufgabe wird durch die kennzeichnenden Merkmale des Anspruchs 7 in Verbindung mit seinen Oberbegriffsmerkmalen gelöst.

Die Unteransprüche bilden vorteilhafte Weiterbildungen der Erfindung.

Der Erfindung liegt diesbezüglich die Erkenntnis zugrunde, dass sich die aufrechte Führung durch eine zusätzliche aufrechte Führung verstärken lässt.

Bei der erfindungsgemäßen Ausgestaltung nach Anspruch 7 ist an der Seitenwange ein Stützteil mit einem Loch auf der Klemmschraube angeordnet, und es ist zwischen der Seitenwange und dem Stützteil eine um die Schwenkachse gekrümmte Führung ausgebildet. Hierdurch sind dem Klemmmechanismus die durch das etwa aufrecht angeordnete Langloch gebildete Führung und die erfindungsgemäße zusätzliche Führung zugeordnet, wodurch eine wesentliche Stabilisierung der Führungssituation erreicht wird.

Es lassen sich bei Gewährleistung einer kompakten Konstruktion große und belastbare Führungsflächen erreichen, wenn das Stützteil die Seitenwange U-förmig übergreift und die Führungsflächen der Führung an den Innenseiten des Stützteils und an den übergriffenen Seiten der Seitenwange angeordnet sind.

Die erfindungsgemäßen Ausgestaltungen eignen sich sowohl für einen hinteren Säulenabschnitt, der in seiner Längsrichtung nicht verschiebbar oder verschiebbar ist. Letzteres kann dadurch erreicht werden, dass der hintere Säulenabschnitt teleskopierbar ist und das Durchgangsloch im Führungskasten für die Klemmschraube als ein sich längs erstreckendes Langloch ausgebildet ist. Hierdurch wird die vorbeschriebene Formschlussverbindung auf die aufrechte Wirksamkeit bezüglich Auf- und Abschwenkbewegungen beschränkt. Dies deshalb, weil die wenigstens eine Verbindungsausnehmung für den zugehörigen Verbindungszapfen als sich längs erstreckendes Langloch ausgebildet werden muss, um die längs gerichtete Verschiebbarkeit des hinteren Säulenabschnitts zu gewährleisten.

Eine Ausgestaltung, bei der die Seitenwangen Teile eines Schiebers sind, der in einer Längsführung eines an einem Wandteil der Karosserie des Kraftfahrzeugs befestigbaren Basisteils so schwergängig verschiebbar gelagert ist, dass er nur durch eine Kraft bestimmter Größe verschiebbar ist, lässt sich bei einem Crash Energie abbauen. Die am hinteren Ende des Säulenabschnitts auftretende und den Fahrer bedrohende Energie lässt sich dadurch reduzieren.

Es ist zur weiteren Stabilisierung des Klemmmechanismus vorteilhaft, die das Stützteil tragende Seitenwange als massive plattenförmige Seitenwange auszubilden. Dabei wird eine kompakte Konstruktion erreicht, wenn die Seitenwange sich als Teil der Halterung oder als Teil des Schiebers nach unten erstreckt.

Aufgrund der erfindungsgemäßen Stabilisierungen kann die Seitenwange, die der das Stützteil tragenden Seitenwange gegenüberliegend angeordnet ist, in bekannter Weise durch ein Lamellenpaket gebildet sein, dessen Lamellen abwechselnd an der Halterung oder am Schieber und am Führungskasten befestigt sind und abwechselnd ineinandergreifen.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im Folgenden anhand des in der Zeichnung dargestellten Ausführungsbeispiels näher beschrieben. In der Beschreibung, in den Patentansprüchen, in der Zusammenfassung und in der Zeichnung werden die in der hinten angeführten Liste der Bezugszeichen verwendeten Begriffe und zugeordneten Bezugszeichen verwendet. In der Zeichnung bedeutet:

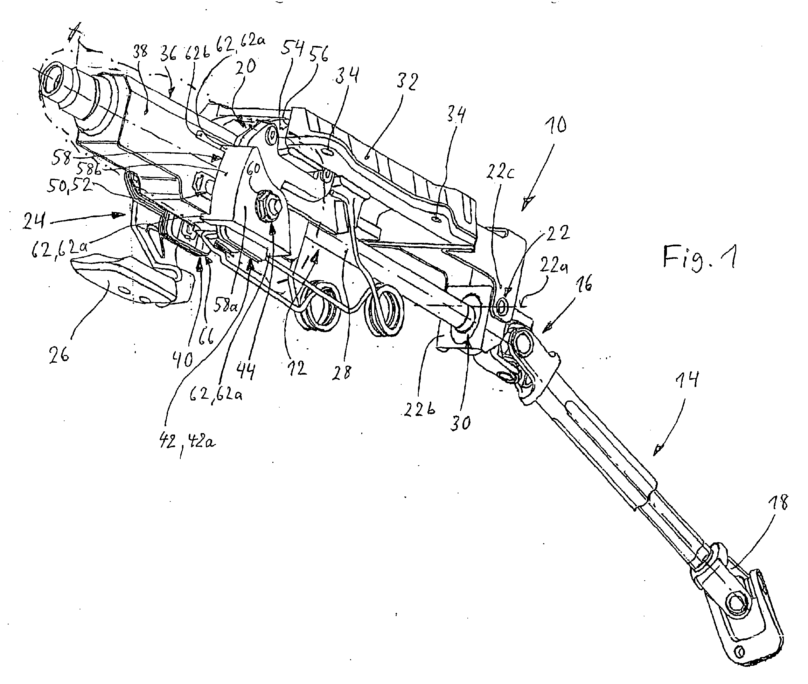

- Fig. 1: eine perspektivische Ansicht einer erfindungsgemäßen Lenksäule in der Blickrichtung von hinten und seitlich schräg unten;
- Fig. 2: eine perspektivische Ansicht einer in Fig. 1 mit X gekennzeichneten Einzelheit.

Die in ihrer Gesamtheit mit 10 bezeichnete Lenksäule weist einen hinteren Säulenabschnitt 12 und einen vorderen Säulenabschnitt 14 auf, die durch ein Kardangelenk 16 drehbar miteinander verbunden sind. Der vordere Säulenabschnitt 14 ist teleskopierbar ausgebildet und trägt an seinem vorderen Ende ein Verbindungsteil 18, z. B. ein weiteres Kardangelenk, zur Verbindung eines Lenkgestänges. Die Lenksäule 10 erstreckt sich von ihrem vorderen unteren Ende schräg aufwärts zu ihrem hinteren oberen Ende.

Der hintere Säulenabschnitt 12 ist in einer Halterung 20 um eine horizontal und quer verlaufende Gelenkachse 22a eines in seinem vorderen Endbereich angeordneten Schwenkgelenks 22 auf und ab schwenkbar gelagert und durch einen Klemmmechanismus 24 in der jeweiligen Schwenkstellung festklemmbar. Zum Festklemmen kann z. B. ein durch eine Feder in seine Klemmstellung vorgespannter Keiltrieb vorgesehen sein. Zum Lösen ist ein Handhebel 26 vorgesehen, der z. B. nach unten vom Säulenabschnitt 12 absteht.

Der hintere Säulenabschnitt 12 kann auch teleskopierbar sein, um sein hinteres Ende, an dem ein nicht dargestelltes Lenkrad montierbar ist, in seiner Längsrichtung zu verschieben und in der jeweiligen Position mit dem Klemmmechanismus 24 festklemmen zu können. Beim Ausführungsbeispiel besteht der hintere Säulenabschnitt 12 aus einem z. B. teleskopierbaren Rohr 28, das an seinem vorderen Ende in einem Schwenkgelenkteil 22b des Schwenkgelenks 22 in einem Drehlager 30 drehbar gelagert ist. Das andere Schwenkgelenkteil 22c ist durch das vordere Ende eines über dem hinteren Säulenabschnitt 12 angeordneten Basisteils 32 gebildet, das Teil der Halterung 20 ist und z. B. durch Löcher gebildete Befestigungselemente 34 aufweist, mit denen es im Fußraum des Kraftfahrzeugs nach oben begrenzenden Wandbereich (nicht dargestellt) befestigbar ist.

Im hinteren Endbereich des hinteren Säulenabschnitts 12 ist ein Führungskasten 36 mit vorzugsweise ebenen Seitenflächen 38 angeordnet, in dem das Rohr 28 bzw. ein hinteres Rohrteleskopteil drehbar, aber axial nicht verschiebbar gelagert ist. Der Führungskasten 36 ist mit dem Rohr 28 um die Schwenkachse 22a auf und ab schwenkbar zwischen Seitenwangen 40, 42 geführt, die sich als Teile der Halterung 20 von oben nach unten erstrecken.

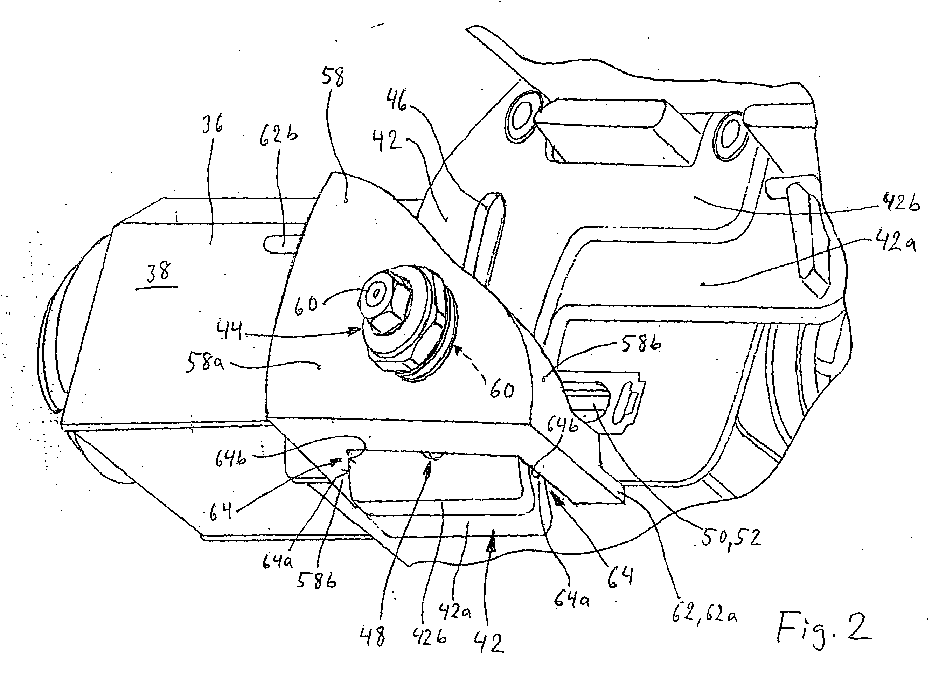

Der Klemmmechanismus 24 weist eine horizontale Klemmschraube 44 auf, die den Führungskasten 36 bezüglich des Rohrs 28 nach unten versetzt in einem Durchgangsloch durchsetzt und die Seitenwangen 40, 42 jeweils in einem sich etwa aufrecht erstreckenden Langloch 46 (Fig. 2) durchsetzt. Durch die gekrümmten Führungsflächen 64 ist eine etwa aufrechte bogenförmige Führung für den hinteren Säulenabschnitt 12 und das Stützteil 58 gebildet.

Wenn der hintere Säulenabschnitt 12 teleskopierbar sein soll, ist das Durchgangsloch im Führungskasten 36 für die Klemmschraube 44 durch ein sich längs erstreckendes Langloch 50 gebildet, so dass der hintere Teleskopteil mit dem Führungskasten 36 manuell längs verschiebbar und in der jeweiligen Position durch den Klemmmechanismus 24 festklemmbar ist. Hierdurch ist eine Längsführung 52 gebildet.

Somit ist der hintere Endbereich des Säulenabschnitts 12 wahlweise auf und ab sowie gegebenenfalls auch längs verstellbar und in der jeweiligen Position feststellbar.

Beim vorliegenden Ausführungsbeispiel sind die Seitenwangen 40, 42 nach unten ragende Abschnitte eines Schiebers 54, der in einer Längsführung 56 des Basisteils 32 mit Bremsfunktion so schwergängig längs verschiebbar ist, dass er erst bei Überschreitung einer bestimmten Schubkraft in der Längsführung 56 verschoben wird. Eine solche Längsverschiebung findet nur bei einem Fahrzeugcrash statt, wobei die Schwergängigkeit einen Teil der Crashenergie aufzehrt und somit die durch den hinteren Säulenabschnitt (12) auf einen Fahrer des Kraftfahrzeugs einwirkbaren Energie verringert oder aufzehrt.

Um zum einen die Fixierung des Klemmmechanismus 24 in der aufrechten Führung 48 zu verbessern und zu verstärken und/oder um die aufrechte Führung 48 zu verbessern und zu verstärken, ist an der einen Seitenwange 42 ein Stützteil 58 vorzugsweise außenseitig angeordnet, das mit einem Langloch 60 auf der Klemmschraube 44 sitzt und durch diese an der Seitenwange 42 festklemmbar ist. Das Stützteil 58 steht durch wenigstens eine Formschlussverbindung 62 mit dem Führungskasten 36 in Verbindung, die durch einen Verbindungszapfen 62a an dem einen Verbindungsteil und eine den Verbindungszapfen 62a aufnehmende Verbindungsausnehmung 62b an dem anderen Verbindungsteil gebildet ist. Der Verbindungszapfen 62a ist vorzugsweise am Stützteil 58 angeordnet, insbesondere daran einteilig ausgebildet.

Zur weiteren Verstärkung der Verbindung können mehrere Formschlussverbindungen 62 auf einer oder beiden Seiten der Seitenwange 42, also rückseitig und vorderseitig, vorgesehen sein. Das Stützteil 58 ist im längs gerichteten Querschnitt mit einer Stegplatte 58a und zwei Schenkeln 58b U-förmig geformt, wobei die Verbindungszapfen 62a an den freien Rändern der Schenkel 58b angeordnet sind. Am hinteren Schenkel 58b sind zwei Verbindungszapfen 62a vorgesehen, von denen der obere in eine Verbindungsausnehmung 62b in der benachbarten Seitenwand des Führungskastens 36 einfasst und der untere den Führungskasten 36 untergreift. Auch der vordere Verbindungszapfen 62a untergreift den Führungskasten 36.

Bei einem nicht teleskopierbaren hinteren Säulenabschnitt 12 kann die Verbindungsausnehmung 62b durch ein Loch zentrierter, z. B. runder, Form gebildet sein. Bei einem teleskopierbaren hinteren Säulenabschnitt 12 ist die wenigstens eine Verbindungsausnehmung 62b als längs gerichtetes Langloch auszubilden, um die längs gerichtete Verschiebbarkeit des hinteren Endbereichs des Säulenabschnitts 12 zu ermöglichen. Bei den den Führungskasten 36 untergreifenden Verbindungszapfen 62a entfällt dies wegen des axial unbegrenzten freien Raumes.

Außerdem weist die Seitenwange 42 eine zusätzliche aufrechte und um die Schwenkachse 22a gekrümmte Führung 64 auf, die durch zwei entsprechend parallel gekrümmte Führungsflächen 64a an den entsprechend gekrümmten vorderen und hinteren Schmalseiten der Seitenwange 42 gebildet sind und mit entsprechend gekrümmten Führungsflächen 64b an den Innenseiten der Schenkel 58b gleitend zusammenwirken.

Beim Ausführungsbeispiel ist die bezüglich einer Verstärkung der Fixierung und/oder der Führung verbesserte Seitenwange 42 durch zwei nebeneinanderliegende und fest miteinander verbundene Wangenscheiben 42a, 42b gebildet, wobei der Schieber 54 und die innere Wangenscheibe 42a aus Leichtmetall, z. B. Magnesium, besteht und die äußere Wangenscheibe 42b aus Stahl besteht, um die Belastungen im Funktionsbetrieb besser aufnehmen zu können. Das Stützteil 58 kann aus Stahl oder Sintermetall bestehen. Auch der Führungskasten 36 kann aus Stahl bestehen. Das Basisteil 32 kann weiterhin aus Leichtmetall bestehen, insbesondere aus Magnesium.

Die gegenüberliegende Seitenwange 42a besteht aus mehreren Lamellen 66, die wechselseitig am Führungskasten 36 und an der Halterung 20 bzw. am Schieber 54 befestigt sind und wechselseitig ineinandergreifen, wie es an sich üblich ist. Das Lamellenpaket sorgt für einen Reibschluss im geklemmten Zustand.

Bei einer manuellen Verstellung der Lenksäule 10 in der Höhe liegt die Schwenkachse 22a im Schwenkgelenk 22. Bei einem Fahrzeugcrash neigt die Konstruktion dazu, die Schwenkachse aufgrund von vorhandenen Elastizitäten und Nachgiebigkeiten in den Bereich der Klemmschraube 44 zu verlagern. Eine solche Bewegung wird durch die erfindungsgemäße Verstärkung der Fixierung und/oder der Führung 48 vermieden. Es wird ein Schwenken des Führungskastens 36 relativ zum Schieber 54 bzw. den Seitenwangen 40,42 verhindert.

Die erfindungsgemäßen Ausgestaltungen eignen sich auch für solche Lenksäulen, die keinen schwergängig verschiebbaren Schieber zwecks Crashkraftaufzehrung aufweisen.

### BEZUGSZEICHENLISTE

- 10: Lenksäule
- 12: Säulenabschnitt
- 14: Säulenabschnitt
- 16: Kardangelenk
- 18: Verbindungsteil
- 20: Halterung
- 22: Schwenkgelenk
- 22a: Gelenkachse
- 22b: Schwenkgelenkteil
- 22c: Schwenkgelenkteil
- 24: Klemmmechanismus
- 26: Handhebel
- 28: Rohr
- 30: Drehlager
- 32: Basisteil
- 34: Befestigungselement
- 36: Führungskasten
- 38: Seitenfläche
- 40: Seitenwange
- 42: Seitenwange
- 42a: Seitenwangenscheibe
- 42b: Seitenwangenscheibe
- 44: Klemmschraube
- 46: Langloch
- 48: Führung
- 50: Langloch
- 52: Längsführung
- 54: Schieber
- 56: Längsführung
- 58: Stützteil
- 60: Langloch
- 62: Formschlussverbindung
- 62a: Verbindungszapfen
- 62b: Verbindungsausnehmung
- 64: Führung
- 64a: Führungsfläche
- 64b: Führungsfläche
- 66: Lamellen

## Patentansprüche

1. Lenksäule (10) für ein Kraftfahrzeug, insbesondere einen Personenkraftwagen, die einen hinteren Säulenabschnitt (12) aufweist, der in einer Halterung (20) um eine horizontal und quer verlaufende Gelenkachse (22a) eines vorderen Schwenkgelenks (22) auf und ab schwenkbar gelagert und durch einen Klemmmechanismus (24) klemmbar ist, wobei die Halterung (20) zwei Seitenwangen (40, 42) aufweist, zwischen denen ein Führungskasten (36) der Lenksäule (10) auf und ab schwenkbar gelagert ist, und der Klemmmechanismus (24) eine Klemmschraube (44) aufweist, die den Führungskasten (36) in einem Durchgangsloch und die Seitenwangen (40, 42) jeweils in einem Langloch (46) durchfasst, **dadurch gekennzeichnet, dass** an einer Seitenwange (42) ein Stützteil (58) mit einem Langloch (60) auf der Klemmschraube (44) sitzt, das durch eine Formschlussverbindung (62) mit dem Führungskasten (36) lösbar verbunden ist.

2. Lenksäule nach Anspruch 1 **dadurch gekennzeichnet, dass** die Formschlussverbindung (62) durch einen oder mehrere Verbindungszapfen (62a) an dem einen Verbindungsteil gebildet ist, der bzw. die jeweils in eine zugehörige Verbindungsausnehmung (62b) im anderen Verbindungsteil einfasst bzw. einfassen.

3. Lenksäule nach Anspruch 1 oder 2, **dadurch gekennzeichnet, dass** der oder die Verbindungszapfen (62a) am Stützteil (58) und die Verbindungsausnehmung oder Verbindungsausnehmungen (62b) in einem Führungskasten (36) des hinteren Säulenabschnitts (12) angeordnet ist bzw. sind.

4. Lenksäule nach einem der vorhergehenden Ansprüche, **dadurch gekennzeichnet, dass** das Stützteil (58) die Seitenwange (42) vorzugsweise U-förmig überdeckt und vorderseitig und/oder rückseitig von der Seitenwange (42) jeweils eine oder mehrere Formschlussverbindungen (62) vorgesehen sind.

5. Lenksäule nach Anspruch 3 oder 4, **dadurch gekennzeichnet, dass** ein oder mehrere untere Verbindungszapfen (62a) den Führungskasten (36) untergreifen.

6. Lenksäule nach einem der vorhergehenden Ansprüche, **dadurch gekennzeichnet, dass** zwischen der Seitenwange (42) und dem Stützteil (58) eine um die Schwenkachse (22a) gekrümmte Führung (48) ausgebildet ist.

7. Lenksäule (10) für ein Kraftfahrzeug, insbesondere einen Personenkraftwagen, die einen hinteren Säulenabschnitt (12) aufweist, der in einer Halterung (20) um eine horizontal und quer verlaufende Gelenkachse (22a) eines vorderen Schwenkgelenks (22) auf und ab schwenkbar gelagert und durch einen Klemmmechanismus (24) klemmbar ist, wobei die Halterung (20) zwei Seitenwangen (40, 42) aufweist, zwischen denen ein Führungskasten (36) der Lenksäule (10) auf und ab schwenkbar gelagert ist, und der Klemmmechanismus (24) eine Klemmschraube (44) aufweist, die den Führungskasten (36) in einem Durchgangsloch und die Seitenwangen (40, 42) jeweils in einem Langloch (46) durchfasst, **dadurch gekennzeichnet, dass** an der Seitenwange (42) ein Stützteil (58) mit einem Langloch (60) auf der Klemmschraube (44) sitzt und zwischen der Seitenwange (42) und dem Stützteil (58) eine um die Schwenkachse (22a) gekrümmte Führung (22) ausgebildet ist.

8. Lenksäule nach Anspruch 7, **dadurch gekennzeichnet, dass** das Stützteil (58) die Seitenwange (42) U-förmig übergreift und die Führungsflächen (64a, 64b) der Führung (48) an den Innenseiten des Stützteils (58) und an den übergriffenen Seiten der Seitenwange (42) angeordnet sind.

9. Lenksäule nach einem der vorhergehenden Ansprüche, **dadurch gekennzeichnet, dass** der hintere Säulenabschnitt (12) teleskopierbar ist und das Durchgangsloch im Führungskasten (36) für die Klemmschraube (44) ein sich längs erstreckendes Langloch (50) ist.

10. Lenksäule nach einem der vorhergehenden Ansprüche, **dadurch gekennzeichnet, dass** die Seitenwangen (40, 42) Teile eines Schiebers (54) sind, der in einer Längsführung (56) eines an einem Wandteil der Karosserie des Kraftfahrzeugs befestigbaren Basisteils (32) so schwergängig verschiebbar gelagert ist, dass er nur durch eine Kraft bestimmter Größe verschiebbar ist.

11. Lenksäule nach einem der vorhergehenden Ansprüche, **dadurch gekennzeichnet, dass** die das Stützteil (58) tragende Seitenwange (42) eine massive plattenförmige Seitenwange ist.

12. Lenksäule nach einem der vorhergehenden Ansprüche, **dadurch gekennzeichnet, dass** die Seitenwange (42) sich als Teil der Halterung (20) oder als Teil des Schiebers (54) nach unten erstreckt.

13. Lenksäule nach einem der vorhergehenden Ansprüche, **dadurch gekennzeichnet, dass** die Seitenwange (40), die der das Stützteil (58) tragenden Seitenwange (42) gegenüberliegend angeordnet ist, durch ein Lamellenpaket (66) gebildet ist, dessen Lamellen abwechselnd an der Halterung (20) oder am Schieber (54) und am Führungskasten (36) befestigt sind und abwechselnd ineinandergreifen.
